# EUROPEAN PATENT APPLICATION

(11) **EP 4 822 153 A1**
(43) Date of publication of application: **14.10.2026**
(21) Application number: 25193722.3
(22) Date of filing: 04.08.2025
(51) Int. Cl.: F01P 7/00, F01P 7/02

(54) **THERMOSTAT DEVICE**

(30) Priority: 08.04.2025 TW 114113209
(71) Applicant: Coplus Inc., Tainan City 709031 (TW)
(72) Inventor: WU, Po-Hua, 709031 Tainan City (TW); WU, Ting-Tsai, 709031 Tainan City (TW); KUO, Chien-Hung, 709031 Tainan City (TW); HSU, Cheng-Tao, 709031 Tainan City (TW); KUO, Chin-Lung, 709031 Tainan City (TW)
(74) Representative: V.O.

(57) **Abstract**

The thermostat device includes a valve seat unit (1) and a valve unit (2). The valve seat unit (1) includes a first valve seat (11) and a second valve seat (12) that define an internal space (S). The first valve seat (11) defines a first communication port (O1), and includes first connecting portions (112) extending towards the second valve seat (12). The second valve seat (12) defines a second communication port (O2), and includes second connecting portions (122) detachably and respectively connected to the first connecting portions (112). The first connecting portions (112) and the second connecting portions (122) define third communication ports (O3) communicating with the internal space (S). The valve unit (2) is disposed in the internal space (S) and is capable of blocking or allowing the first communication port (O1) from or to communicate with the internal space (S).

## Description

The disclosure relates to a device for cooling an engine, and more particularly to a thermostat device.

An automobile typically includes a cooling structure for cooling an engine. The cooling structure includes a water tank, a thermostat device, an inner circulation pipe through which a coolant is circulated between the engine and the thermostat device, and an outer circulation pipe through which the coolant is circulated between the water tank and the thermostat device.

The thermostat device includes a valve seat unit and a valve member unit mounted in the valve seat unit. The valve seat unit includes a first communication port in fluid communication with the water tank through the outer circulation pipe, and a second communication port and a plurality of third communication ports in fluid communication with the engine through the inner circulation pipe. The valve member unit is movable to open and close the first communication port.

When the automobile is started, the coolant in the inner circulation pipe circulates between the engine and the thermostat device. As the automobile runs, temperature of the coolant in the inner circulation pipe rises, and the valve member unit moves to open the first communication port, thereby allowing the inner circulation pipe to be in communication with the outer circulation pipe, and allowing the coolant to circulate among the water tank, the thermostat device, and the engine. When the automobile stops running, the temperature of the coolant drops and the valve member unit returns to its original position and closes the first communication port, thereby causing the inner circulation pipe to no longer be in communication with the outer circulation pipe.

A conventional thermostat device has a disadvantage of the valve member unit being sealed in the valve seat unit and may not be disassembled without damaging the valve seat unit. Therefore, the valve member unit cannot be repaired when an anomaly occurs. An entire thermostat device needs to be replaced, so there is a need for further improvement.

According to an aspect of the disclosure, there is provided a thermostat device according to claim 1.

Other features and advantages of the disclosure will become apparent in the following detailed description of the embodiment(s) with reference to the accompanying drawings. It is noted that various features may not be drawn to scale.
FIG. 1 is a perspective view illustrating a first embodiment of a thermostat device according to the disclosure.
FIG. 2 is an exploded perspective view of the first embodiment.
FIG. 3 is a sectional view illustrating a drive motor of the first embodiment in a first state and a movable valve member in a first position.
FIG. 4 is a perspective view of a metal sheet of the first embodiment.
FIG. 5 is a view similar to FIG. 3 but illustrating the drive motor in a second state and the movable valve member in a second position.
FIG. 6 is an exploded perspective view illustrating a second embodiment of the thermostat device according to the disclosure.
FIG. 7 is a sectional view of the second embodiment.
FIG. 8 is an exploded perspective view illustrating a third embodiment of the thermostat device according to the disclosure.
FIG. 9 is a sectional view of the third embodiment.
FIG. 10 is a perspective view of the metal sheet of a fourth embodiment of the thermostat device according to the disclosure.
FIG. 11 is a perspective view illustrating a fifth embodiment of the thermostat device according to the disclosure.
FIG. 12 is another perspective view of the fifth embodiment taken from another angle.
FIG. 13 is a sectional view of the fifth embodiment.

Before the disclosure is described in greater detail, it should be noted that where considered appropriate, reference numerals or terminal portions of reference numerals have been repeated among the figures to indicate corresponding or analogous elements, which may optionally have similar characteristics.

It should be noted herein that for clarity of description, spatially relative terms such as "top," "bottom," "upper," "lower," "on," "above," "over," "downwardly," "upwardly" and the like may be used throughout the disclosure while making reference to the features as illustrated in the drawings. The features may be oriented differently (e.g., rotated 90 degrees or at other orientations) and the spatially relative terms used herein may be interpreted accordingly.

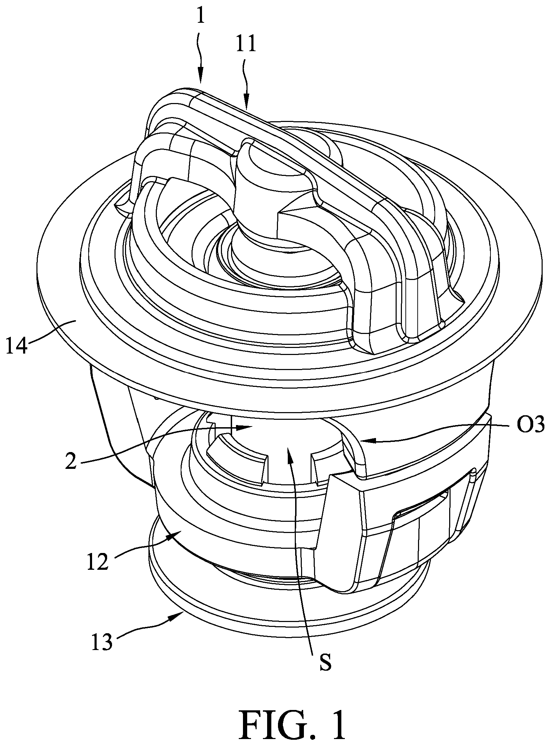

Referring to FIGS. 1, 2, 3, a first embodiment of the thermostat device according to the present disclosure includes a valve seat unit 1 that defines an internal space (S), and a valve unit 2 that is disposed in the internal space (S).

The valve seat unit 1 includes a first valve seat 11 and a second valve seat 12 that cooperatively define the internal space (S), a third valve seat 13 that is mounted on the second valve seat 12, and a metal sheet 14 that is embedded in the first valve seat 11.

The first valve seat 11 is made of a plastic material, specifically a polyphenylene sulfide (PPS) material. The first valve seat 11 includes a first annular portion 111 that extends in a circumferential direction (D1), a plurality of first connecting portions 112 that extend from an outer periphery of the first annular portion 111 toward the second valve seat 12, and a bridge portion 113 that is opposite to the first connecting portions 112.

The first annular portion 111 defines a first communication port (01) that extends in an axial direction. The first communication port (01) communicates with the internal space (S). Each of the first connecting portions 112 includes a hook head 114. The hook head 114 of each of the first connecting portions 112 includes an extension section 115 that extends in the axial direction, and an abutment portion 116 that extends radially from and that is connected to the extension section 115. The bridge portion 113 radially straddles the first annular portion 111.

The second valve seat 12 is made of a plastic material, specifically a polyphenylene sulfide material. The second valve seat 12 includes a second annular portion 121 that has an annular shape, a plurality of second connecting portions 122 that extend from an outer periphery of the second annular portion 121 toward the first valve seat 11, and an annular protrusion 123 that protrudes upwardly from an inner periphery of the second annular portion 121.

The second annular portion 121 surrounds to define a second communication port (O2) that axially extends through the second annular portion 121 and that communicates with the internal space (S). The second connecting portions 122 are detachably and respectively connected to the first connecting portions 112. Each of the second connecting portions 122 includes a clasp member 124. The clasp member 124 of each of the second connecting portions 122 is adapted to allow the hook head 114 of a respective one of the first connecting portions 112 to engage therewith and defines a fastening hole 125 extending therethrough in a radial direction. The second connecting portions 122 and the first connecting portions 112 cooperatively define a plurality of third communication ports (O3) that extend radially to communicate with the internal space (S).

The third valve seat 13 is made of a plastic material, specifically a polyphenylene sulfide material. The third valve seat 13 is inserted into the second communication port (O2), and includes an annular seat 131 that has an annular shape, a plurality of engaging arm portions 132 that extend radially from the annular seat 131 toward the second valve seat 12, and a plurality of protrusion portions 133 that extend radially inward from the annular seat 131. The engaging arm portions 132 cooperatively abut against a top end of the annular protrusion 123 of the second valve seat 12. Each of the protrusion portions 133 has a semi-circular shape.

In other embodiments, each of the first valve seat 11, the second valve seat 12, and the third valve seat 13 is made of another plastic material, such as polystyrene or ABS resin.

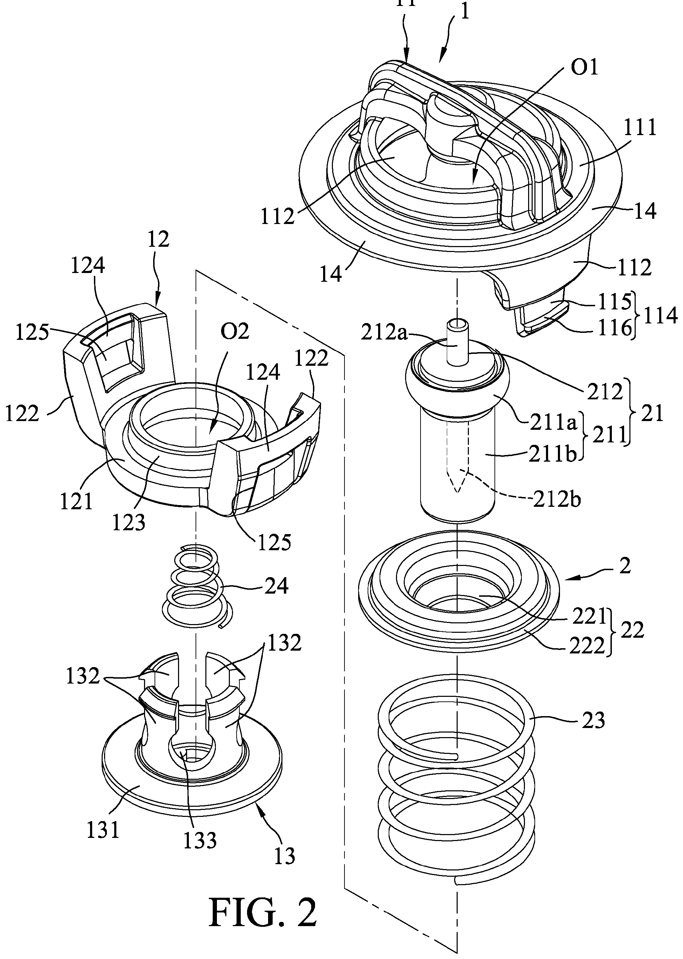

Referring to FIGS. 2, 3, 4, in this embodiment, the metal sheet 14 is partially embedded in the first annular portion 111 of the first valve seat 11. In other embodiments, the metal sheet 14 may be completely embedded in the first annular portion 111, thereby preventing direct contact between the metal sheet 14 and other hard objects.

The metal sheet 14 includes a first annular part 141, a second annular part 142 that is radially spaced apart from the first annular part 141, and a plurality of extension portions 143 that interconnect the first annular part 141 and the second annular part 142.

Each of the first annular part 141 and the second annular part 142 has an annular shape. The first annular part 141 radially protrudes out of the first annular portion 111 of the first valve seat 11. The second annular part 142 is located at an inner side of the first annular portion 111 and is located in the first communication port (01). The extension portions 143 are angularly spaced apart from each other. Each of the extension portions 143 is located and embedded in the first annular portion 111 and extends radially inward from the first annular part 141 toward the second annular part 142 so as to integrally interconnect the first annular part 141 and the second annular part 142.

The valve unit 2 includes a drive motor 21 that is located in the internal space (S), a movable valve member 22 that is annular and that is sleeved on the drive motor 21, a biasing member 23 that is disposed between and abuts against the movable valve member 22 and the second valve seat 12, and a resilient member 24 that is disposed in the third valve seat 13.

The drive motor 21 is a wax motor, and includes a motor body 211 and a motor shaft 212 that is inserted into the motor body 211.

The motor body 211 includes a head portion 211a that has a wider upper end and a narrower lower end, and a cylindrical body portion 211b that is inserted into the engaging arm portions 132 of the third valve seat 13.

The motor shaft 212 includes a cylindrical post body portion 212a and a taper portion 212b. The post body portion 212a is fixedly inserted into the bridge portion 113 of the first valve seat 11. The taper portion 212b is inserted into the motor body 211.

The movable valve member 22 is made of metal and has an annular shape. The movable valve member 22 includes an inner annular portion 221 and an outer annular portion 222. The inner annular portion 221 extends from the outer annular portion 222, tapers towards the second valve seat 12 and abuts against the head portion 211a of the motor body 211. The outer annular portion 222 abuts against the second annular part 142 of the metal sheet 14 of the valve seat unit 1. The outer annular portion 222 and the inner annular portion 221 are adapted to cooperate with the drive motor 21 to close the first communication port (01), so that the first communication port (01) is not in communication with the internal space (S).

The biasing member 23 is a spring that extends axially and abuts against the outer annular portion 222 of the movable valve member 22 and the second annular portion 121 of the second valve seat 12. The biasing member 23 surrounds the inner annular portion 221 of the movable valve member 22, the drive motor 21, and the annular protrusion 123 of the second valve seat 12, and may provide a resilient force to push the movable valve member 22 against the first valve seat 11 in the axial direction.

The resilient member 24 is a spring that extends axially and that abuts against a bottom end of the body portion 211b of the drive motor 21 and the protrusion portion 133 of the third valve seat 13. The resilient member 24 also provides a pushing force in the axial direction, which may cooperate with the biasing member 23 to push the motor body 211 to move towards the first valve seat 11.

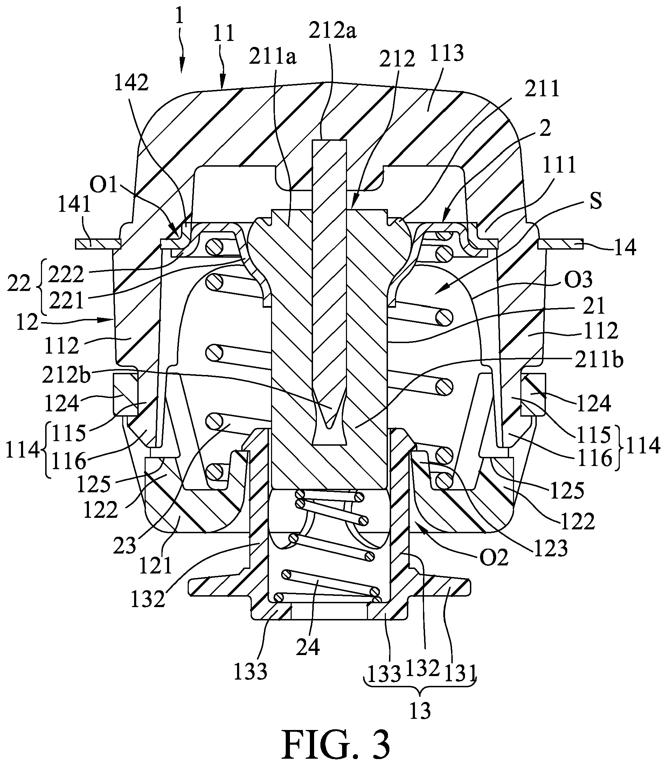

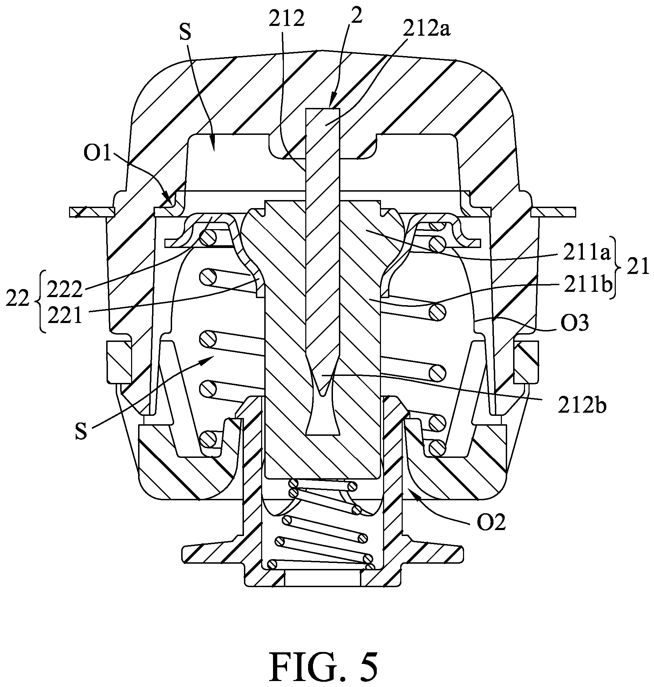

Referring to FIGS. 2, 3, and 5, under the action of a coolant, the drive motor 21 may switch between a first state as shown in FIG. 3 and a second state as shown in FIG. 5. The movable valve member 22 may switch between a first position as shown in FIG. 3 and a second position as shown in FIG. 5.

When the drive motor 21 is in the first state and the movable valve member 22 is in the first position, the movable valve member 22 abuts against the second annular part 142 of the metal sheet 14 of the valve seat unit 1 and cooperates with the drive motor 21 to close the first communication port (01).

When an engine of a vehicle has been running for a while and temperature of the coolant rises, i.e., switching the coolant from an internal circulation mode to an external circulation mode, wax of the drive motor 21 (the wax motor) may expand due to heat and push the taper portion 212b of the motor shaft 212. However, since the post body portion 212a of the motor shaft 212 is inserted into the bridge portion 113 of the first valve seat 11 and does not move, the motor body 211 moves relative to the motor shaft 212. Specifically, expansion of the wax of the drive motor 21 may cause the motor body 211 to move towards the second valve seat 12 away from the first valve seat 11, thereby causing the drive motor 21 to switch to the second state.

In addition, the inner annular portion 221 of the movable valve member 22 and the head portion 211a of the motor body 211 of the drive motor 21 match each other in shape and are both tapered in a direction from the first valve seat 11 to the second valve seat 12. While the drive motor 21 switches from the first state to the second state, the movable valve member 22 moves towards the second valve seat 12 due to the inner annular portion 221 being pushed by the head portion 211a of the motor body 211, so that the movable valve member 22 switches to the second position.

In the second position, the outer annular portion 222 of the movable valve member 22 is spaced apart from the second annular part 142 of the metal sheet 14 in the axial direction, thereby allowing the coolant to flow through a gap between the movable valve member 22 and the metal sheet 14 into the first communication port (01).

That is to say, the drive motor 21 may actuate the movable valve member 22 to move relative to the first valve seat 11, so as to selectively block or allow communication between the first communication port (01) and the internal space (S), thereby switching the coolant between the internal circulation mode and the external circulation mode. The first communication port (01) is adapted to be in fluid communication with a water tank, while the second communication port (O2) and the third communication ports (O3) are adapted to be in fluid communication with the engine.

By virtue of the hook heads 114 of the first connecting portions 112 and the clasp members 124 of the second connecting portions 122, the first valve seat 11 and the second valve seat 12 are detachably connected to each other. Therefore, when a component of the valve unit 2 is damaged, the first valve seat 11 and the second valve seat 12 may be separated from each other for replacement of the component of the valve unit 2.

By virtue of the metal sheet 14 being embedded in the first valve seat 11 made of a plastic material, since the plastic material provides better insulation than a metal material, the metal sheet 14 may not be severely deformed due to excessive thermal expansion under the insulation of the first valve seat 11, thereby increasing stability of the thermostat device during operation.

In other embodiments of the present disclosure, configurations of each of the first connecting portions 112 and a respective one of the second connecting portions 122 may be exchanged with each other. Specifically, each of the first connecting portions 112 may include the clasp member 124 as described above, and each of the second connecting portions 122 may include the hook head 114 as described above.

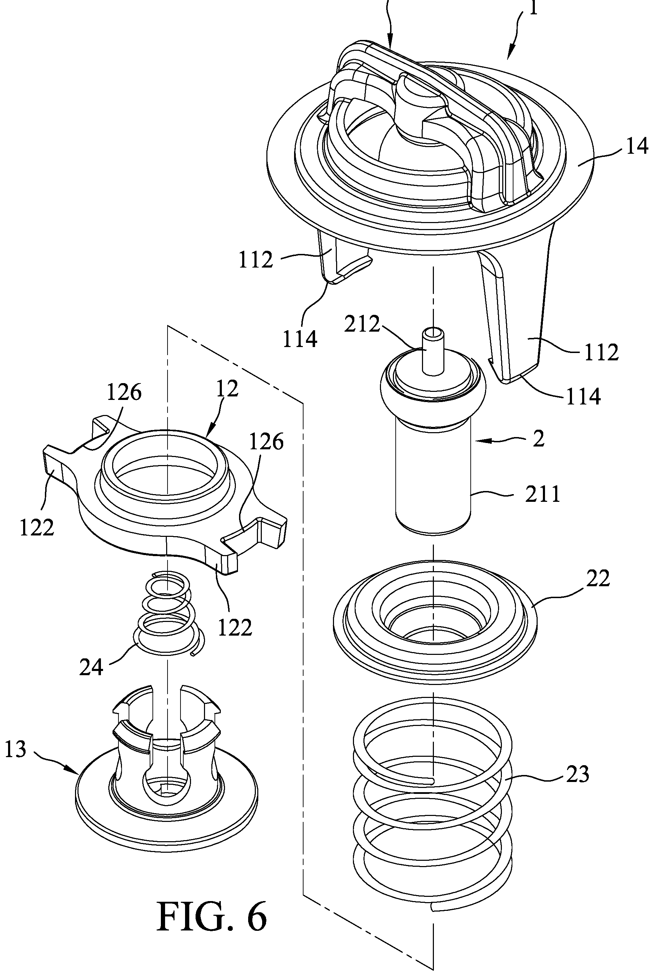

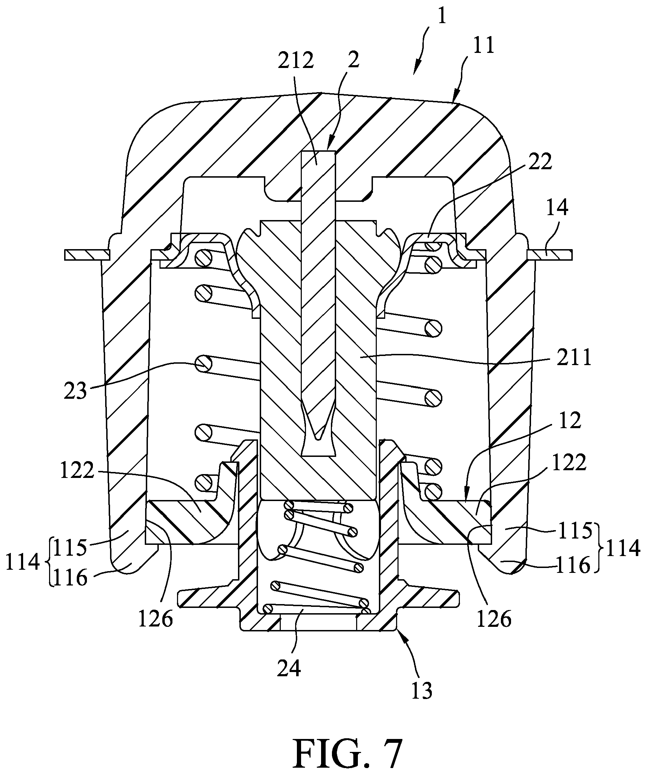

Referring to FIG. 6 and FIG. 7, a second embodiment of the thermostat device of the present disclosure is similar to the first embodiment, except that each of the second connecting portions 122 has a clamping slot 126 having an opening that opens radially outward. Each of the hook heads 114 is inserted into the clamping slot 126 of the respective one of the second connecting portions 122 and engages the respective one of the second connecting portions 122.

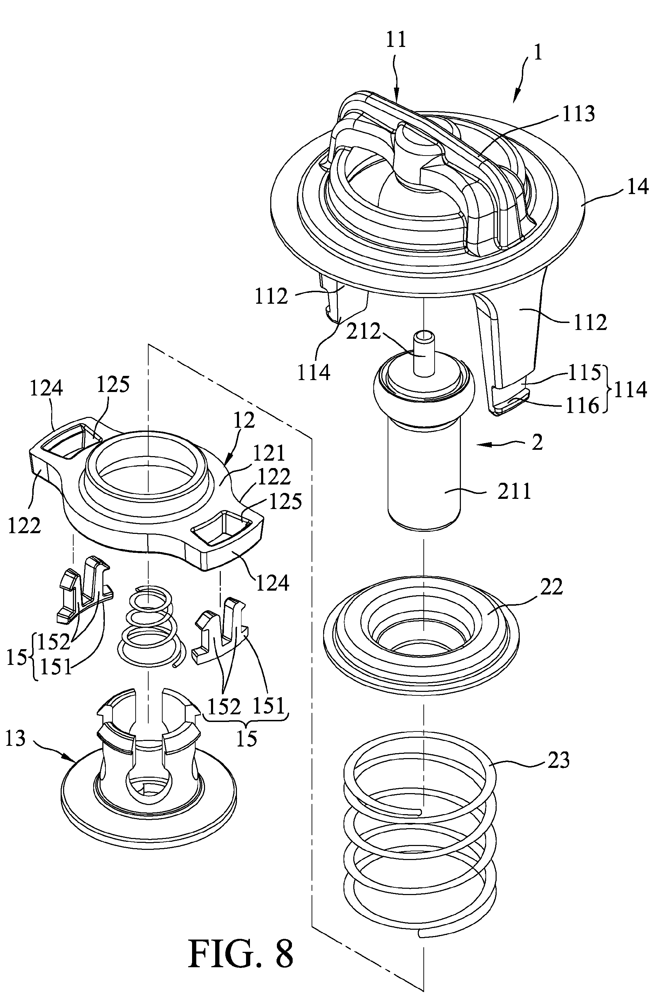

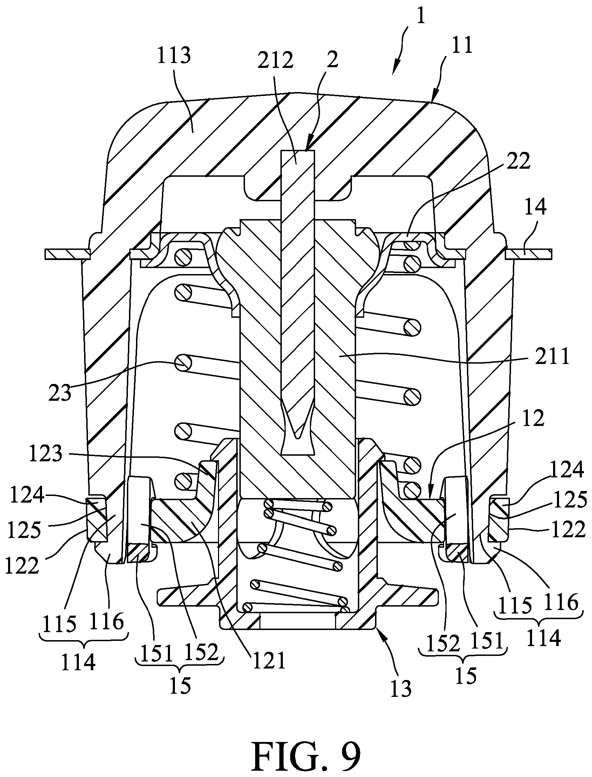

Referring to FIGS. 8 and 9, a third embodiment of the thermostat device of the present disclosure is similar to the first embodiment, except that each of the second connecting portions 122 extends radially outward from the second annular portion 121, that the fastening hole 125 of the clasp member 124 of each of the second connecting portions 122 extends axially therethrough, and that the hook head 114 of each of the first connecting portions 112 is inserted into the fastening hole 125 of the respective one of the second connecting portions 122 and engages the clasp member 124 of the respective one of the second connecting portions 122.

In addition, the valve seat unit 1 further includes a plurality of engaging cushion blocks 15 each of which is inserted into the fastening hole 125 of a respective one of the second connecting portions 122. Each of the engaging cushion blocks 15 abuts against the clasp member 124 of the respective one of the second connecting portions 122, and is disposed between the hook head 114 of a respective one of the first connecting portions 112 and the clasp member 124 of the respective one of the second connecting portions 122. Each of the engaging cushion blocks 15 includes a base block portion 151 that extends in the circumferential direction (D1) and two engaging block portions 152 that are spaced apart from each other in the circumferential direction (D1). Each of the engaging cushion blocks 15 engages the clasp member 124 of the respective one of the second connecting portions 122 in the axial direction by virtue of the base block portion 151 and the engaging block portions 152. The engaging cushion blocks 15 may enhance stability of a combination of the first valve seat 11 and the second valve seat 12.

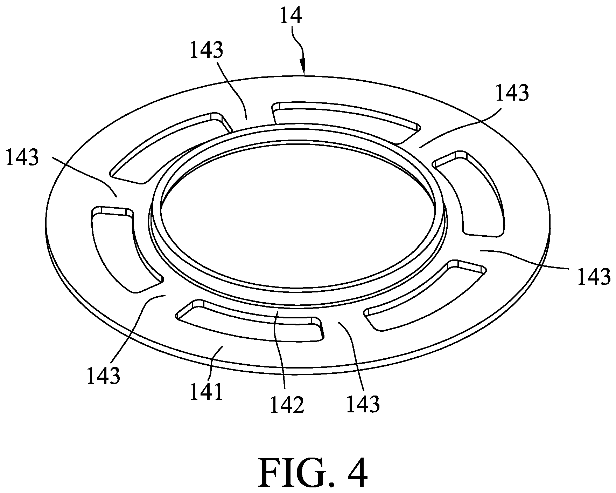

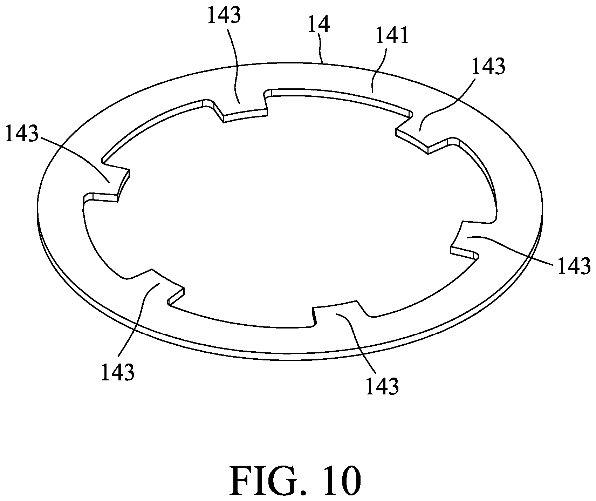

Referring to FIG. 10, a fourth embodiment of the thermostat device of the present disclosure is similar to the first embodiment, except that the second annular part 142 of the metal sheet 14 is omitted (see FIG. 4), and that the metal sheet 14 only includes the first annular part 141 and the extension portions 143.

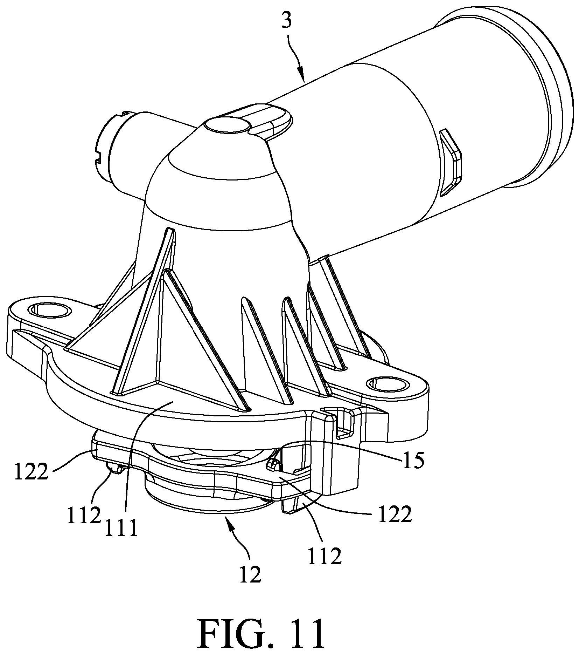

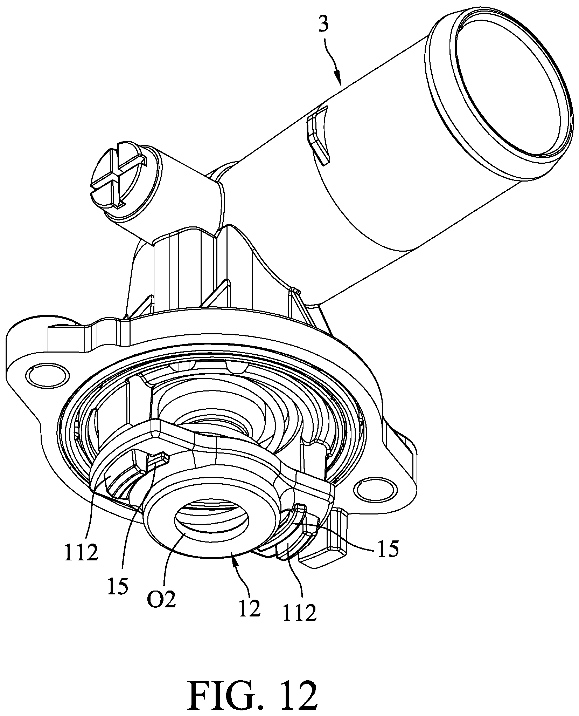

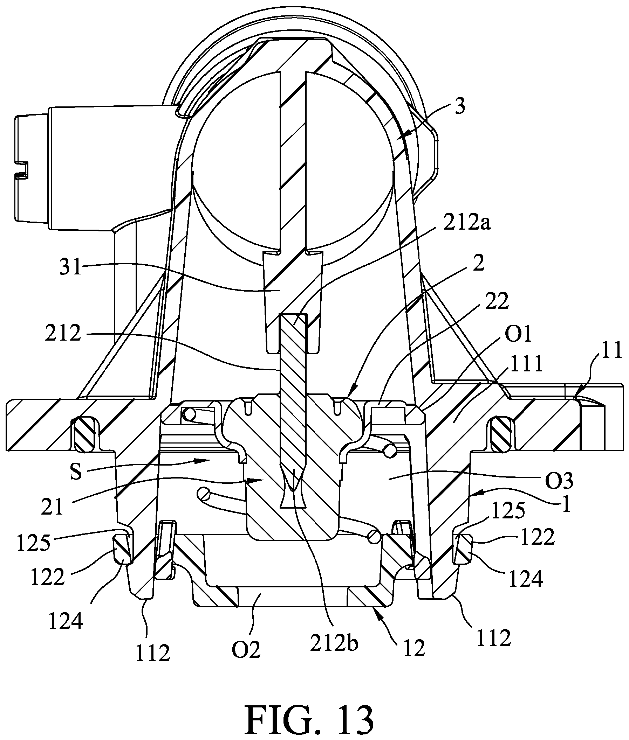

Referring to FIGS. 11, 12, and 13, a fifth embodiment of the thermostat device of the present disclosure is similar to the third embodiment, except for the following.

The third valve seat 13 (see FIG. 8) and the metal sheet 14 (see FIG. 9) of the valve seat unit 1 are omitted.

The bridge portion 113 (see FIG. 8) of the first valve seat 11 of the valve seat unit 1 is omitted. The first annular portion 111 of the first valve seat 11 is integrally connected to a flow tube 3, but still defines the first communication port (01). The flow tube 3 is a tubular body for the coolant to flow therethrough.

The annular protrusion 123 (see FIG. 9) of the second valve seat 12 is omitted, but the second annular portion 121 still defines the second communication port (O2), and each of the second connecting portions 122 still includes the clasp member 124 and the fastening hole 125. The first connecting portions 112 and the second connecting portions 122 still cooperatively define the third communication ports (O3).

The post body portion 212a of the motor shaft 212 of the drive motor 21 of the valve unit 2 is inserted into a support column 31 of the flow tube 3. The movable valve member 22 of the valve unit 2 may also be actuated to move in the direction from the first valve seat 11 to the second valve seat 12 by the drive motor 21 to block or allow the communication between the first communication port (01) and the internal space (S).

In the fifth embodiment, since the first valve seat 11 and the second valve seat 12 are still detachably connected to each other through the first connecting portions 112 and the second connecting portions 122, when a component of the valve unit 2 is damaged, the component of the valve unit 2 may be repaired by simply disassembling the second valve seat 12 from the first valve seat 11.

In sum, the first valve seat 11 and the second valve seat 12 are detachably connected to each other through the first connecting portions 112 and the second connecting portions 122, so that when an anomaly occurs with the valve unit 2, the first valve seat 11 and the second valve seat 12 may be disassembled for maintenance of the valve unit 2, thereby resolving the issue of a conventional thermostat device being difficult to be repaired.

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

## Claims

1. A thermostat device, **characterized in that**:
a valve seat unit (1) including a first valve seat (11) and a second valve seat (12) that cooperatively define an internal space (S), the first valve seat (11) surrounding to define a first communication port (01) that communicates with the internal space (S), and including a plurality of first connecting portions (112) that extend towards the second valve seat (12), the second valve seat (12) surrounding to define a second communication port (O2) that communicates with the internal space (S), and including a plurality of second connecting portions (122) that are detachably and respectively connected to the first connecting portions (112), the first connecting portions (112) and the second connecting portions (122) cooperatively defining a plurality of third communication ports (O3) that communicate with the internal space (S); and
a valve unit (2) disposed in the internal space (S) and capable of blocking the first communication port (01) from the internal space (S) or allowing the first communication port (01) to communicate with the internal space (S).

2. The thermostat device as claimed in claim 1, wherein each of the first connecting portions (112) detachably engages a respective one of the second connecting portions (122).

3. The thermostat device as claimed in claim 2, wherein one of each of the first connecting portions (112) and the respective one of the second connecting portions (122) includes a hook head (114), the hook head (114) including an extension section (115) that extends in an axial direction and an abutment portion (116) that extends radially from and that is connected to the extension section (115).

4. The thermostat device as claimed in claim 3, wherein another one of each of the first connecting portions (112) and the respective one of the second connecting portions (122) includes a clasp member (124) that allows the hook head (114) of the one of the first connecting portions (112) and the respective one of the second connecting portions (122) to engage therewith and that defines a fastening hole (125) radially extending therethrough.

5. The thermostat device as claimed in claim 3, wherein another one of each of the first connecting portions (112) and the respective one of the second connecting portions (122) includes a clasp member (124) that is adapted to allow the hook head (114) of the one of the first connecting portions (112) and the respective one of the second connecting portions (122) to engage therewith and that defines a fastening hole (125) axially extending therethrough.

6. The thermostat device as claimed in claim 5, wherein the valve seat unit (1) further includes a plurality of engaging cushion blocks (15), the fastening hole (125) of the clasp member (124) of the another one of each of the first connecting portions (112) and the respective one of the second connecting portions (122) permitting a respective one of the engaging cushion blocks (15) to be inserted thereinto, the clasp member (124) of the another one of each of the first connecting portions (112) and the respective one of the second connecting portions (122) permitting the respective one of the engaging cushion blocks (15) to abut thereagainst, the hook head (114) of the one of each of the first connecting portions (112) and the respective one of the second connecting portions (122) and the clasp member (124) of the another one of the first connecting portion (112) and the respective one of the second connecting portions (122) permitting the respective one of the engaging cushion blocks (15) to be disposed therebetween.

7. The thermostat device as claimed in claim 3, wherein another one of each of the first connecting portions (112) and the respective one of the second connecting portions (122) includes a clamping slot (126) that has an opening which opens outwardly, the hook head (114) of the one of each of the first connecting portions (112) and the respective one of the second connecting portions (122) being inserted into the clamping slot (126) of the another one of the first connecting portion (112) and the respective one of the second connecting portions (122) and connected to the respective one of the second connecting portions (122).

8. The thermostat device as claimed in claim 1, wherein the first valve seat (11) includes a first annular portion (111) that defines the first communication port (01), the first connecting portions (112) that extend from the first annular portion (111) toward the second valve seat (12), and a bridge portion (113) that is opposite to the first connecting portions (112).

9. The thermostat device as claimed in claim 8, wherein the valve unit (2) includes a drive motor (21) that is located in the internal space (S), and a movable valve member (22) that is annularly sleeved on the drive motor (21), the drive motor (21) being capable of actuating the movable valve member (22) to move in a direction from the first valve seat (11) to the second valve seat (12) so as to allow the first communication port (01) be in communication with the internal space (S).

10. The thermostat device as claimed in claim 9, wherein the valve unit (2) further includes a biasing member (23) that is disposed between and abuts against the movable valve member (22) and the second valve seat (12), the biasing member (23) providing a resilient force to push the movable valve member (22) against the first valve seat (11).

11. The thermostat device as claimed in claim 10, wherein the second valve seat (12) includes a second annular portion (121) that defines the second communication port (O2), and the second connecting portions (122) that are connected to the second annular portion (121), the valve seat unit (1) further including a third valve seat (13) that is inserted in the second communication port (O2), the valve unit (2) further including a resilient member (24) that extends axially and that is disposed between and abuts against the drive motor (21) and the third valve seat (13).

12. The thermostat device as claimed in claim 8, wherein the valve seat unit (1) further includes a metal sheet (14) embedded in the first annular portion (111), the metal sheet (14) including a first annular part (141) and a plurality of extension portions (143) that extend radially inward from the first annular part (141), the extension portions (143) being located in the first annular portion (111).

13. The thermostat device as claimed in claim 12, wherein the metal sheet (14) further includes a second annular part (142) that is radially spaced apart from the first annular part (141) and that is located in the first communication port (01), each of the extension portions (143) radially extending to interconnect the first annular part (141) and the second annular part (142).

14. The thermostat device as claimed in claim 13, wherein the first annular part (141) protrudes out of the first annular portion (111).

15. The thermostat device as claimed in claim 1, further comprising a flow tube (3) that is integrally connected to the first valve seat (11).

## Amended claims

### Amended claims in accordance with Rule 137(2) EPC.

**1.** A thermostat device adapted for cooling an engine, comprising:
a valve seat unit (1) including a first valve seat (11) and a second valve seat (12) that cooperatively define an internal space (S), the first valve seat (11) surrounding to define a first communication port (01) that communicates with the internal space (S), and including a plurality of first connecting portions (112) that extend towards the second valve seat (12), the second valve seat (12) surrounding to define a second communication port (O2) that communicates with the internal space (S), and including a plurality of second connecting portions (122) that are detachably and respectively connected to the first connecting portions (112), the first connecting portions (112) and the second connecting portions (122) cooperatively defining a plurality of third communication ports (O3) that communicate with the internal space (S); and
a valve unit (2) disposed in the internal space (S) and capable of blocking the first communication port (01) from the internal space (S) or allowing the first communication port (01) to communicate with the internal space (S);
wherein each of the first connecting portions (112) detachably engages a respective one of the second connecting portions (122);
the thermostat device being **characterized in that**:
one of each of the first connecting portions (112) and the respective one of the second connecting portions (122) includes a hook head (114), the hook head (114) including an extension section (115) that extends in an axial direction and an abutment portion (116) that extends radially from and that is connected to the extension section (115).

**2.** The thermostat device as claimed in claim 1, wherein another one of each of the first connecting portions (112) and the respective one of the second connecting portions (122) includes a clasp member (124) that allows the hook head (114) of the one of the first connecting portions (112) and the respective one of the second connecting portions (122) to engage therewith and that defines a fastening hole (125) radially extending therethrough.

**3.** The thermostat device as claimed in claim 1, wherein another one of each of the first connecting portions (112) and the respective one of the second connecting portions (122) includes a clasp member (124) that is adapted to allow the hook head (114) of the one of the first connecting portions (112) and the respective one of the second connecting portions (122) to engage therewith and that defines a fastening hole (125) axially extending therethrough.

**4.** The thermostat device as claimed in claim 3, wherein the valve seat unit (1) further includes a plurality of engaging cushion blocks (15), the fastening hole (125) of the clasp member (124) of the another one of each of the first connecting portions (112) and the respective one of the second connecting portions (122) permitting a respective one of the engaging cushion blocks (15) to be inserted thereinto, the clasp member (124) of the another one of each of the first connecting portions (112) and the respective one of the second connecting portions (122) permitting the respective one of the engaging cushion blocks (15) to abut thereagainst, the hook head (114) of the one of each of the first connecting portions (112) and the respective one of the second connecting portions (122) and the clasp member (124) of the another one of the first connecting portion (112) and the respective one of the second connecting portions (122) permitting the respective one of the engaging cushion blocks (15) to be disposed therebetween.

**5.** The thermostat device as claimed in claim 1, wherein another one of each of the first connecting portions (112) and the respective one of the second connecting portions (122) includes a clamping slot (126) that has an opening which opens outwardly, the hook head (114) of the one of each of the first connecting portions (112) and the respective one of the second connecting portions (122) being inserted into the clamping slot (126) of the another one of the first connecting portion (112) and the respective one of the second connecting portions (122).

**6.** The thermostat device as claimed in claim 1, wherein the first valve seat (11) includes a first annular portion (111) that defines the first communication port (01), the first connecting portions (112) that extend from the first annular portion (111) toward the second valve seat (12), and a bridge portion (113) that is opposite to the first connecting portions (112).

**7.** The thermostat device as claimed in claim 6, wherein the valve unit (2) includes a drive motor (21) that is located in the internal space (S), and a movable valve member (22) that is annularly sleeved on the drive motor (21), the drive motor (21) being capable of actuating the movable valve member (22) to move in a direction from the first valve seat (11) to the second valve seat (12) so as to allow the first communication port (01) be in communication with the internal space (S).

**8.** The thermostat device as claimed in claim 7, wherein the valve unit (2) further includes a biasing member (23) that is disposed between and abuts against the movable valve member (22) and the second valve seat (12), the biasing member (23) providing a resilient force to push the movable valve member (22) against the first valve seat (11).

**9.** The thermostat device as claimed in claim 8, wherein the second valve seat (12) includes a second annular portion (121) that defines the second communication port (O2), and the second connecting portions (122) that are connected to the second annular portion (121), the valve seat unit (1) further including a third valve seat (13) that is inserted in the second communication port (O2), the valve unit (2) further including a resilient member (24) that extends axially and that is disposed between and abuts against the drive motor (21) and the third valve seat (13).

**10.** The thermostat device as claimed in claim6, wherein the valve seat unit (1) further includes a metal sheet (14) embedded in the first annular portion (111), the metal sheet (14) including a first annular part (141) and a plurality of extension portions (143) that extend radially inward from the first annular part (141), the extension portions (143) being located in the first annular portion (111).

**11.** The thermostat device as claimed in claim 10, wherein the metal sheet (14) further includes a second annular part (142) that is radially spaced apart from the first annular part (141) and that is located in the first communication port (01), each of the extension portions (143) radially extending to interconnect the first annular part (141) and the second annular part (142).

**12.** The thermostat device as claimed in claim 11, wherein the first annular part (141) protrudes out of the first annular portion (111).

**13.** The thermostat device as claimed in claim 1, further comprising a flow tube (3) that is integrally connected to the first valve seat (11).

**1.** A thermostat device adapted for cooling an engine, comprising:
a valve seat unit (1) including a first valve seat (11) and a second valve seat (12) that cooperatively define an internal space (S), the first valve seat (11) surrounding to define a first communication port (01) that communicates with the internal space (S), and including a plurality of first connecting portions (112) that extend towards the second valve seat (12), the second valve seat (12) surrounding to define a second communication port (O2) that communicates with the internal space (S), and including a plurality of second connecting portions (122) that are detachably and respectively connected to the first connecting portions (112), the first connecting portions (112) and the second connecting portions (122) cooperatively defining a plurality of third communication ports (O3) that communicate with the internal space (S); and
a valve unit (2) disposed in the internal space (S) and capable of blocking the first communication port (01) from the internal space (S) or allowing the first communication port (01) to communicate with the internal space (S);
wherein each of the first connecting portions (112) detachably engages a respective one of the second connecting portions (122);
the thermostat device being **characterized in that**:
one of each of the first connecting portions (112) and the respective one of the second connecting portions (122) includes a hook head (114), the hook head (114) including an extension section (115) that extends in an axial direction and an abutment portion (116) that extends radially from and that is connected to the extension section (115), and
another one of each of the first connecting portions (112) and the respective one of the second connecting portions (122) includes a clamping slot (126) that has an opening which opens outwardly, the hook head (114) of the one of each of the first connecting portions (112) and the respective one of the second connecting portions (122) being inserted into the clamping slot (126) of the another one of the first connecting portion (112) and the respective one of the second connecting portions (122).

**2.** The thermostat device as claimed in claim 1, wherein the first valve seat (11) includes a first annular portion (111) that defines the first communication port (01), the first connecting portions (112) that extend from the first annular portion (111) toward the second valve seat (12), and a bridge portion (113) that is opposite to the first connecting portions (112).

**3.** The thermostat device as claimed in claim 2, wherein the valve unit (2) includes a drive motor (21) that is located in the internal space (S), and a movable valve member (22) that is annularly sleeved on the drive motor (21), the drive motor (21) being capable of actuating the movable valve member (22) to move in a direction from the first valve seat (11) to the second valve seat (12) so as to allow the first communication port (01) be in communication with the internal space (S).

**4.** The thermostat device as claimed in claim 3, wherein the valve unit (2) further includes a biasing member (23) that is disposed between and abuts against the movable valve member (22) and the second valve seat (12), the biasing member (23) providing a resilient force to push the movable valve member (22) against the first valve seat (11).

**5.** The thermostat device as claimed in claim 4, wherein the second valve seat (12) includes a second annular portion (121) that defines the second communication port (O2), and the second connecting portions (122) that are connected to the second annular portion (121), the valve seat unit (1) further including a third valve seat (13) that is inserted in the second communication port (O2), the valve unit (2) further including a resilient member (24) that extends axially and that is disposed between and abuts against the drive motor (21) and the third valve seat (13).

**6.** The thermostat device as claimed in claim 2, wherein the valve seat unit (1) further includes a metal sheet (14) embedded in the first annular portion (111), the metal sheet (14) including a first annular part (141) and a plurality of extension portions (143) that extend radially inward from the first annular part (141), the extension portions (143) being located in the first annular portion (111).

**7.** The thermostat device as claimed in claim 12, wherein the metal sheet (14) further includes a second annular part (142) that is radially spaced apart from the first annular part (141) and that is located in the first communication port (01), each of the extension portions (143) radially extending to interconnect the first annular part (141) and the second annular part (142).

**8.** The thermostat device as claimed in claim 7, wherein the first annular part (141) protrudes out of the first annular portion (111).

**9.** The thermostat device as claimed in claim 1, further comprising a flow tube (3) that is integrally connected to the first valve seat (11).
